# EUROPEAN PATENT APPLICATION

(11) **EP 0 791 728 A1**
(43) Date of publication of application: **27.08.1997**
(21) Application number: 96400393.3
(22) Date of filing: 26.02.1996
(51) Int. Cl.: F01L 3/20, F01L 3/08, F01N 7/08, F01N 3/20, F01N 3/02, F16K 41/14

(54) **Valve in an exhaust path**

(71) Applicant: FUJI OOZX INC., Fujisawa-shi, Kanagawa-ken (JP)
(72) Inventor: Satoh, Yasuaki, c/o Fuji Oozx Inc., Fujisawa-shi, Kanagawa-ken (JP)
(74) Representative: Schrimpf, Robert

(57) **Abstract**

A valve (7) is provided in an exhaust path (2) of an internal combustion engine. A valve element (7a) of the valve is slidably engaged in a valve guide (8) between opened and closed positions of the valve (7). A sealing portion (20) such as an outer flange (19) of a valve stem (7a) of the valve element (7) is engaged on the end (8a) of the valve guide (8) in the opened position to prevent leakage of high temperature gas.

## Description

### BACKGROUND OF THE INVENTION

The present invention relates to a valve in an exhaust path of an internal combustion engine.

In an exhaust system of a diesel engine of a vehicle such as a truck, a pipe is divided to two branching paths, each of which has a catalytic exhaust gas filter. A valve is provided at an upper stream of the exhaust gas filter. When the truck runs at a predetermined distance, the valve at one of the branching path is closed with slight opening, and adhered material in a downstream exhaust gas filter, such as carbon, is burnt and removed, and, then, the same is made at the other branching path, thereby recovering the exhaust gas filters. Recovery of the exhaust gas filters are made, for example, by every distance for 200 km of the truck, by closing one of the valves for five minutes. Except recovering time, both valves are opened.

A conventional valve in an exhaust path comprises two types, one being pushing-closed type, the other being pulling-closed type. In the pushing-closed type of valve, vacuum pulling force is converted to pushing force by a linking machine to push a valve element toward a valve seat against spring force, and in the pulling-closed type of valve, a valve element is forced against spring force towards a valve seat by vacuum pulling force.

In any of pushing- and pulling-closed types of valves, high temperature exhaust gas which flows through an exhaust path is escaped to a spring chamber through a gap between the valve stem and valve guide which slidably guides the stem. Such high temperature exhaust gas leakage affects heating, which is disadvantageous. Especially, if a vacuum actuator is integrally connected in the spring chamber, heating effect will be significant. SUMMARY OF THE INVENTION

In view of the disadvantages in the prior art, it is an object of the present invention to provide a valve in an exhaust path to prevent leakage of high temperature gas between a valve element and a valve guide.

According to the present invention, there is provided a valve in an exhaust path of an internal combustion engine, the valve comprising:
an valve element which is slidably guided in a valve guide, the element being slidable between closed and opened positions of the valve; and
a sealing portion which is formed at a valve stem, the sealing portion being engaged on an end face of the valve guide in the opened position.

The sealing portion may preferably comprise an outer flange formed at the valve stem of the valve element, or may comprise the first tapered surface formed at the valve stem and the second tapered surface at the end of the valve guide, the first tapered surface being fitted in the second tapered surface in the opened position.

The sealing portion acts as stopper in the opened position, and can prevent leakage of high temperature gas through a gap between the valve guide and the valve stem.

### BRIEF DESCRIPTION OF THE DRAWINGS

The features and advantages of the present invention will become more apparent from the following description of preferred embodiments with respect to appended drawings wherein:
Fig. 1 is a sectional view which illustrates the first embodiment of a valve in an exhaust path according to the present invention in an opened position;
Fig. 2 is a sectional view which illustrates the same in a closed position; and
Fig. 3 is a partially enlarged sectional view of an valve element in the second embodiment according to the present invention.

### DETAILED DESCRIPTION OF PREFERRED EMBODIMENT

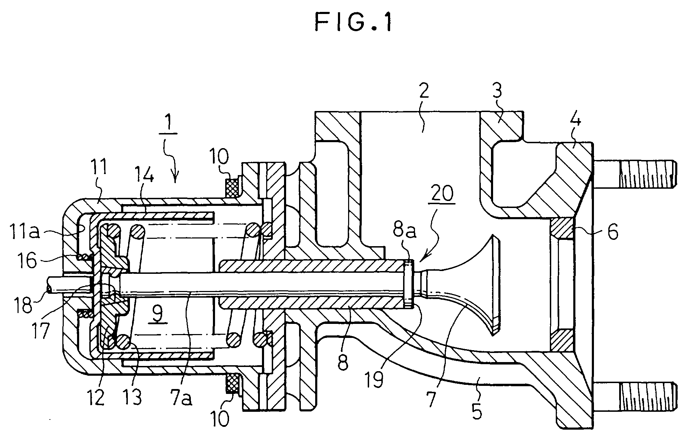

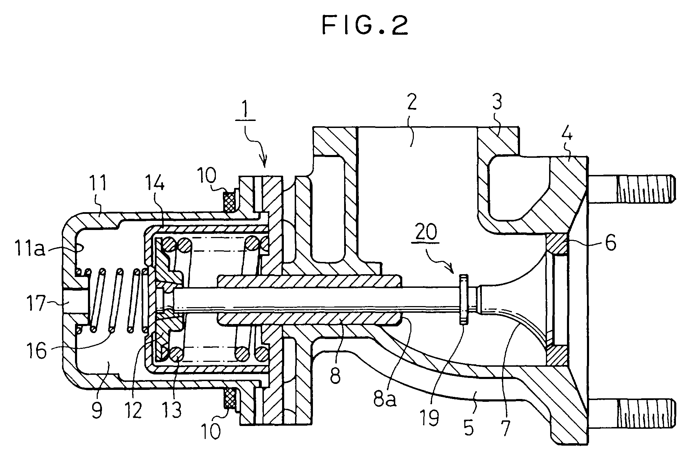

Figs. 1 and 2 illustrate the first embodiment of a valve in an exhaust path of an internal combustion engine according to the present invention. A valve portion 1 comprises a casted body which includes a bent portion 2 which has an exhaust path, and is integrally formed with flanges 3 and 4 at the opening ends respectively. 5 denotes a rib around the bent portion 2 for reinforcement and heat radiation.

At one opening end of the bent portion 2, a valve seat 6 is provided in the flange 4, and a valve element 7 is engaged on the valve seat 6 in a closed position. A valve stem 7a of the valve element 7 is slidably engaged in a tubular valve guide 8 which projects from the bent portion 2, and slides between the closed position (in Fig. 2) in which the valve element 7 is engaged on the valve seat 6, in an opened position (in Fig. 1).

In a casing 11 fixed on the bent portion 2 by bolts 10 and 10, a spring chamber 9 is formed to contain the end of the valve stem 7a of the valve element 7. In the spring chamber 9, a compression spring 13 is provided between the end of the casted body and a spring retainer 12 engaged on the valve stem 7a of the valve element 7. In a tubular guide member 14, the compression spring 13 and spring retainer 12 are disposed with the end of a valve stem 7a of the valve 7 which projects a central opening 17 of the valve retainer 12.

An operational rod 18 of an vacuum actuator (not shown) is engaged on the opposite side to the guide member 14. A weaker compression spring 16 is provided between the guide member 14 and the wall of the casing 11.

A sealing portion 20 is formed around the valve stem 7a of the valve 7 and comprises a flange 19 which acts as stopper and seal. The flange 19 is engaged on an end face 8a of a valve guide 8 in an opened position. Thus, the sealing portion 20 acts as stopper in an opened position, and prevents high temperature gas which passes through the bent portion from leaking through a gap between the valve guide 8 and the valve stem 7a.

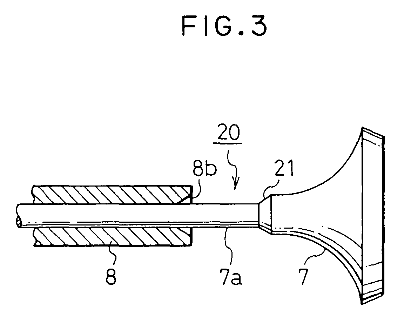

The second embodiment in Fig. 3 illustrates a tapered surface 21 formed on the valve stem 7a instead of the flange 19 in the sealing portion 20. The end of the valve guide 8 has a tapered surface 8b which fits the tapered surface of the valve stem 7a. In this embodiment, the tapered surface 21 acts as a stopper and a sealing member.

The foregoings relate to a valve in an exhaust path, but the present invention may apply to other types of valves provided in an exhaust path, such as an exhaust gas recirculation valve (EGR valve).

The foregoings merely relate to embodiments. Various changes and modifications may be made by person skilled in the art without departing from the scope of claims wherein:

## Claims

1. A valve in an exhaust path of an internal combustion engine, the valve comprising:
an valve element which is slidably guided in a valve guide, the element being slidable between closed and opened positions of the valve; and
a sealing portion which is formed at a valve stem, the sealing portion being engaged on an end face of the valve guide in the opened position.

2. A valve as defined in claim 1 wherein the sealing portion comprises an outer flange.

3. A valve as defined in claim 1 wherein the sealing portion comprises a first tapered surface at the valve stem, and a second tapered surface at an end of the valve guide, the first tapered surface being fitted in the second tapered surface in the opened position.
